# EUROPEAN PATENT APPLICATION

(11) **EP 2 077 451 A1**
(43) Date of publication of application: **08.07.2009**
(21) Application number: 07807799.7
(22) Date of filing: 22.09.2007
(51) Int. Cl.: G01N 35/08, G01N 37/00, B01J 19/00, B81B 1/00

(54) **MICROCHIP AND METHOD OF PRODUCING MICROCHIP**

(30) Priority: 26.10.2006 JP 2006290874
(71) Applicant: Konica Minolta Medical & Graphic, Inc., Hino-shi Tokyo 191-8511 (JP)
(72) Inventor: SANDO, Yasuhiro, Hino-shi Tokyo 191-8511 (JP); HIGASHINO, Kusunoki, Hino-shi Tokyo 191-8511 (JP); NAKAJIMA, Akihisa, Hino-shi Tokyo 191-8511 (JP); AOKI, Youichi, Hino-shi Tokyo 191-8511 (JP)
(74) Representative: Roberts, Mark Peter
(86) International application number: PCT/JP2007/068470
(87) International publication number: WO 2008/050562

(57) **Abstract**

A microchip, having: two flow path substrates having flow paths in a shape of a groove formed on one side of each substrate thereof; and a communication hole substrate on which a communication hole is formed to communicate the flow paths of the two substrates each other; wherein the two substrates are bonded in a way that the surfaces, on which the flow paths in the shape of the groove formed, face each other, having the communication hole substrate therebetween.

## Description

### FIELD OF THE INVENTION

The present invention relates to a micro chip and micro chip manufacturing method.

### PRIOR ART

In recent years, there has been developed a system in which micro devices (for example, pump, valve, flow path and sensor) to conduct chemical analysis and chemical synthesis are integrated on one chip by utilizing micro machining technology and ultra micro fabrication technology (for example, Patent Document 1: unexamined Japanese patent application publication No. 2004-108285). The above system is called a µ-TAS(Micro Total Analysis System), a bio reactor, a lab-on-chip or a bio chip. Application of the above system is expected in fields of medical examination, a field of diagnosis, a field of environmental measurement, a field of agricultural manufacturing. In practice, as a gene test exemplifies, in case complicated processes, proficient procedure technique and operation of equipment are required, the micro analysis system which is automated, enhanced in speed and simplified, confers tremendous benefits such as saving costs, necessary analyte and time needed as well as enabling analysis irrespective of time and place.

In various kinds of analyses and inspections, quantitative performance, accuracy and economic efficiency of the chip for analysis are emphasized (hereinafter, the above chip in which micro flow paths are provide in the chip and various kids of reactions are carried out in the micro flow paths is called a microchip). Thus an issue is to establish a fluid feeding system having a high reliability with a simple configuration, and a micro flow control element having a high accuracy and a superior reliability is desired, thus a micro pump system and a control method suitable for the fluid feeding system is suggested (Patent Document 2 to 4: unexamined Japanese patent application publication No. 2001-322099, 2004-108285, and 2004-270537).

However, there is a limit to configure the flow path in the micro chip with a limited size, thus to configure a complicated flow path, the flow path has to be configured in three dimensions. For example, there has been suggested a stacked type microchip where a plurality of substrates are stacked to configure the flow paths in three dimensions and communication holes to intercommunicate with the flow paths are provided (Patent Documents 5 to 6: Unexamined Japanese patent application publication No. 2006-187685 and 2006-208284).
Patent document 1: Unexamined Japanese patent application publication No. 2004-28589
Patent document 2: Unexamined Japanese patent application publication No. 2001-322099
Patent document 3: Unexamined Japanese patent application publication No.2004-108285
Patent document 4: Unexamined Japanese patent application publication No.2004-270537
Patent document 5: Unexamined Japanese patent application publication No.2006-187685
Patent document 6: Unexamined Japanese patent application publication No.2006-208284

### DISCLOSURE OF THE INVENTION

### PROBLEMS TO BE SOLVED BY THE INVENTION

The holes penetrating the substrate (hereinafter called through holes) such as communicating holes provided on the substrate of the stacked type microchip are generally formed by injection mold using a metal mold where pins for through holes are implanted. However, since metal mold accuracy and conditions of injection mold are severe, and burrs are formed, there is a problem yield percentage is low. In case micro the flow paths in 10 µm order and the through holes are formed by one metal mold, in particular, the burrs tend to be formed at through hole sections. The metal mold to form such micro flow paths has to be produced by nickel electrocasting. However, since a hardness of nickel is lower than ordinary metal mold steels, if the pin for the through hole is pressed with a strong force, the pin is distorted.

The present invention is attained to resolve the above problem. An object of the present invention is to provide the stacked type microchip which is easily manufactured and a method of manufacturing the microchip thereof.

### MEANS TO SOLVE THE PROBLEMS

The object of the present invention can be attained by the following configurations.
1. A microchip, having: two flow path substrates having flow paths in a shape of a groove formed on one side of each substrate thereof; and a communication hole substrate in which a communication hole is formed to communicate the flow paths of the two substrates each other; wherein the two substrates are bonded in a way that the surfaces, on which the flow paths in the shape of the groove formed, face each other, having the communication hole substrate therebetween.
2. The microchip of item 1, one of the two substrates is provided with the flow path having a flow path width of not more than 200 µm, and an another substrate of the two substrates is not provided with the flow path having the flow path width of not more than 200 µm.
3. The microchip of item 1 or 2, one of the two substrates, not provided with the flow path having the flow path width of not more than 200 µm, is provide with a through hole penetrating the flow path substrate thereof.
4. The microchip of item 3, wherein the though hole is a reagent injection port through which a reagent is injected.
5. The microchip of item 3, wherein the though hole is an analyte injection port through which an analyte is injected.
6. The microchip of item 3, wherein the though hole is an air communication hole which communicates with air in an atmosphere.
7. A manufacturing method of a microchip, including: forming a flow path in a shape of a groove on one side of two substrate respectively; forming a through hole on a through hole substrate to communicate the two substrates; and bonding the two substrates in a way that the surfaces, on which the flow paths in the shape of the groove formed, face each other having the communication hole substrate therebetween.
8. The manufacturing method of the microchip of item 7, wherein one of the two substrates is formed by injection mold using a nickel electrocasting mold.

### EFFECTS OF THE INVENTION

According to the present invention, a stacked type microchip can be manufactured easily by bonding the two substrates, where a flow path in the shape of the groove is formed on one surface of each substrate, in a way that the surfaces, on which the flow paths in the shape of the groove formed, face each other having the communication hole substrate, in which the communication hole to intercommunicate the flow path substrates is formed therebetween.

### BRIEF DESCRIPTION OF THE DRAWINGS

Fig. 1 is a cross-sectional view of a microchip 1 on a first embodiment of the present invention.
Fig. 2 is a view showing micro flow path 6a provided on a flow path substrate 2 of the first embodiment of the present invention.
Fig. 3 is a view showing coarse flow paths 6b provided on a flow path substrate 3 of the first embodiment of the present invention.
Fig. 4 is a view showing through holes 7 provided on a through hole substrate 4 of the first embodiment of the present invention.
Fig. 5 is a cross-sectional view of a microchip 1 of a second embodiment of the present invention.
Fig. 6 is an external view of a reaction detecting device 80 using the microchip 1 of the present invention.
Fig. 7 is a cross-sectional view showing an example of an internal structure of the reaction detecting device 80 using the microchip 1 of the first embodiment.
Fig. 8 is a cross-sectional view showing an example of an internal structure of the reaction detecting device 80 using the microchip 1 of the second first embodiment.
Fig. 9 is an explanatory diagram showing an example of a structure of a drive fluid pump 92 of an embodiment of the present invention.

### DESCRIPTION OF THE SYMBOLS

1 Microchip
2 Flow path substrate
3 Flow path substrate
4 Communication hole substrate
6 Flow path
6a Micro flow path
6b Coarse flow path
7 Communicating hole
8 Waste fluid reservoir section
11 Recessed section
13 Reagent storing section
15 Merging section
16 Mixed regent storing section
17 Reagent receiving section
18 Reaction section
19 Detection section
20 Process fluid storing section
21 Air communication hole
A Cooling area
B Heating area
33 Air purge flow path
61 Intermediate flow path
80 Reaction detecting device
91 Drive fluid tank
82 Storing body
83 Insert opening
84 Display section
85 Memory card slot
86 Print output port
87 Operation panel
88 Input/output terminal
90 Packing
91 Drive fluid tank
92 Drive fluid pump

### DESCRIPTION OF THE PREFERRED EMBODIMENT

The present invention will be described in details as follow. The microchip of the present invention performs reaction of an analyte and a regent for purposes of various kinds of inspections, chemical analyses, chemical synthesizing, and processing and separating the analyte in a micro flow path or in a structure section provided in a chip in a shape of a board.

Applications of the microchip of the present invention include, for example, inspection and diagnosis of a biological matter created by gene amplification reaction, antigen-antibody reaction, inspection and diagnosis of other chemical matters, chemical synthesis of desired compounds by organic synthesis, medical benefits screening, extraction of chemicals, and forming and separating a metal complex.

An embodiment of the present invention will be described with reference to the drawings as follow.

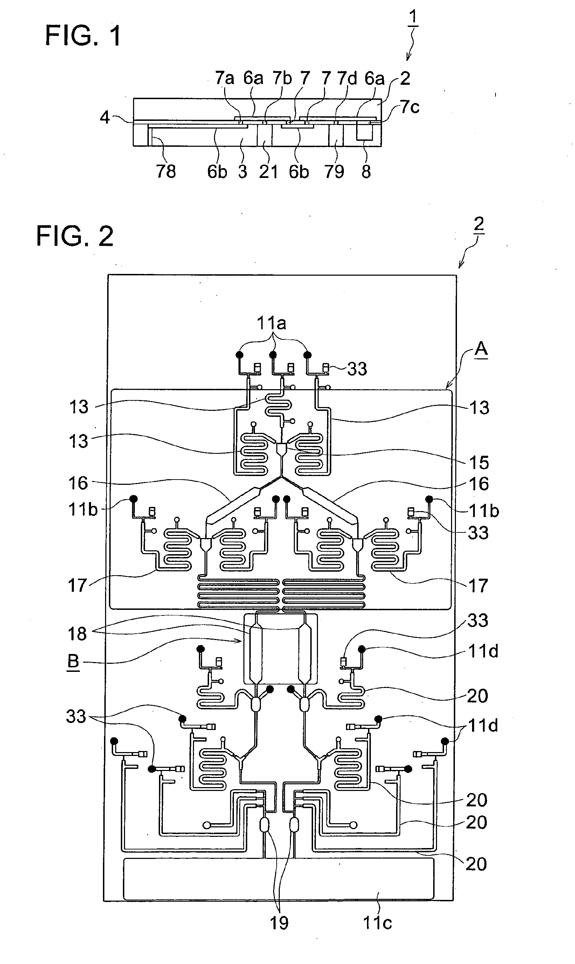

Fig. 1 is a cross-sectional view of a microchip 1 of a first embodiment of the present invention.

Lateral and longitudinal size of an entire chip of the microchip 1 is typically several tens of mms and a height is typically several mms, depending on applications.

The microchip 1 has a three-layer structure configured with a flow path substrate 2 on whose inner surface a flow path 6 is formed, a flow path substrate 3 and a communication hole substrate 4. A part of the micro flow path 6a formed on the flow path substrate 2 is less than 200 µm in a flow path width and preferably 100 µm to 50 µm. On the other hand, a coarse flow path 6b formed on the flow path substrate 3 is more than 200 µm in the entire flow path width and preferably 300 µm to 5 mm. The micro flow path 6a and the coarse flow path 6b communicate each other.

Here, "flow path width" means a lateral width in case a cross-section perpendicular to a flow direction is in a shape of rectangular, and an average value of the lateral widths in case the cross-section is in a shape similar to rectangular. A height of the flow path is appropriately determined, for example, 10 µm to 1000 µm irrespective of the flow path width of a narrow flow path in the forgoing or a flow path wider than that.

A numeral 78 is a drive fluid injection port. Drive fluid injected from the drive fluid injection port 78 drives the reagent stored in the micro flow path 6a of the flow path substrate 2 via the coarse flow path 6a and a communication hole 7a. On the other hand, an analyte injected from an unillustrated analyte injection port 79 flows in the micro flow path 6a of the flow path substrate 2 from through hole 7d, and reacts with the reagent injected from the unillustrated reagent injection port. Then waste fluid after reaction is stored in a waste fluid reservoir section 8. The air communication hole 21 is provided for purging air in the flow path 6 when fluid such as the drive fluid is injected. The drive fluid injection port 78, the analyte injection port 79, the air communicating port 21 are through holes penetrating the flow path substrate 3.

In the microchip 1 of the present invention, the flow path substrate 2 and flow path substrate 3 are formed by injection molding and the flow path is formed by laminating the communication hole substrate 4 between the flow path substrate 2 and the flow path substrate 3. As resin materials of the flow path substrates 2 and 3 on which the flow path is formed, various kinds are used in accordance with purposes. For example, polystyrene, polyethylene, polypropylene, polyethylene terephthalate, polymethylmethacrylate, and polycarbonate are cited. The flow pas substrate 2, the communication hole substrate 4 and the flow path substrate 3 are bonded by applying a silicone system cohesive between them.

The flow path substrate 2 is formed by injection mold using a metal mold on which a pattern of a groove to be the micro flow path 6a and a flat surface metal mold. A thickness of the flow path substrate 2 is about 1 mm to 1.5 mm. As a metal mold for groove pattern forming surface side to be the micro flow path, a metal mold consisting primarily of nickel capable of forming a fine flow path pattern having the flow path width of not more than 200 µm is used. The metal mold consisting primarily of nickel is formed, for example, by nickel electrocasting using the groove of the flow path formed by micro machining using photolithography technology as a master block.

By adding various kinds of additives to nickel used for the metal mold, mechanical characteristics of the metal mold can be adjusted. For example, by adding cobalt, a hardness of the metal mold can be improved. However, since the hardness of the metal mold is still low compared to ordinal metal mold, even cobalt is added, the pin for forming the hole to penetrate the flow path substrate 2 cannot be pressed onto the nickel electrocasting metal mold with a sufficient force. Therefore, when the through hole is formed on the flow path substrate 2, burrs tend to be formed at a portion of the through hole which deteriorates the yield percentage.

The flow path substrate 3 is formed by injection mold using a metal mold on which the pattern of the grove to be the coarse flow path 6b is formed and a flat surface metal mold. A thickness of the flow path substrate 3 is about 1 mm to 1.5 mm. The metal mold on which the pattern of the groove to be the coarse flow path 6b is formed can be produced by ordinary machining such as cutting work with, for example, numerical control. Also, on the flow path substrate 3, through holes such as the drive fluid injection port 78, the analyte injection port 79 and air communicating hole 21 are formed. For the above purpose, a metal mold composed of a hard metal material capable of implanting the pint for forming the hole to penetrate the flow path substrate 3 is used. Thus, as the metal material, a metal mold steel is used preferably.

The communication hole substrate 4 is a substrate in a shape of a film on which the communication hole 7 is formed, and the communication hole 7 is formed using a metal mold. A thickness of the communication hole substrate 4 is about 100 µm and as a resin material, polypropylene is used. Also, a diameter of the communication hole 7 is about 0.3 mm to 1.5 mm, and the communication hole 7 to penetrate the communication hole substrate 4 can be readily formed using a metal mold composed of a hard metal material on which the pin to form the communication hole 7 is implanted.

As above, since the metal mold on which the patter of the groove to be the micro flow path 6a having the flow path width of not more than 200 µm cannot be formed by machining, in the present invention, only the flow path substrate 2 is formed by nickel electrocasting and the though hole is not provided on the flow path substrate 2. On the other hand, the through hole such as the communication hole 7 is provided on the communication hole substrate 4 and the flow path substrate 3 where forming of the through hole is easy, and the flow paths intercommunicate each other via the communication hole substrate 4. Therefore, the stacked type microchip can be readily manufactured.

Also, in the above structure, the flow paths are covered by the thick flow path substrate 2 and flow path substrate 3, it is difficult for the reagent to evaporate.

Fig. 2 is a view showing the micro flow path 6a provided on a flow path substrate 2 of the microchip 1 of the first embodiment.

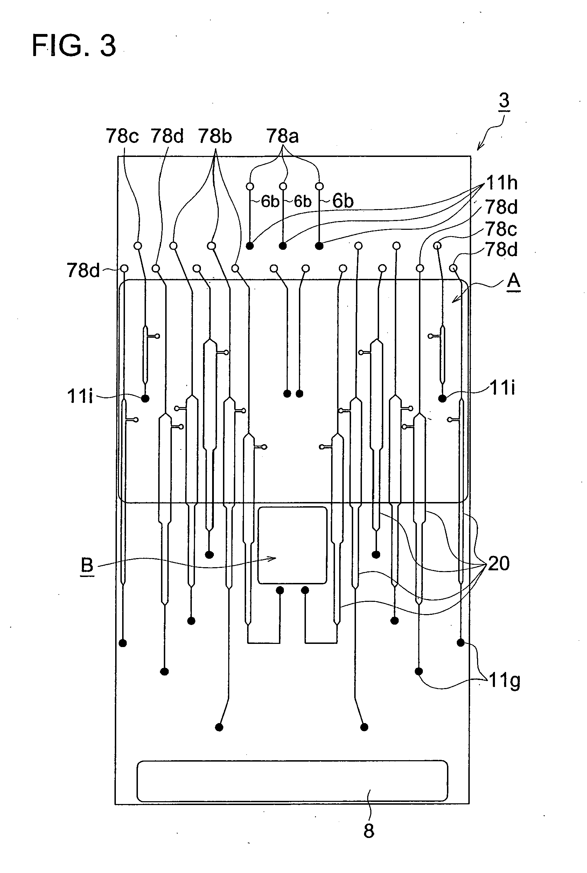

Fig. 3 is a view showing the coarse flow paths 6b provided on the flow path substrate 3.

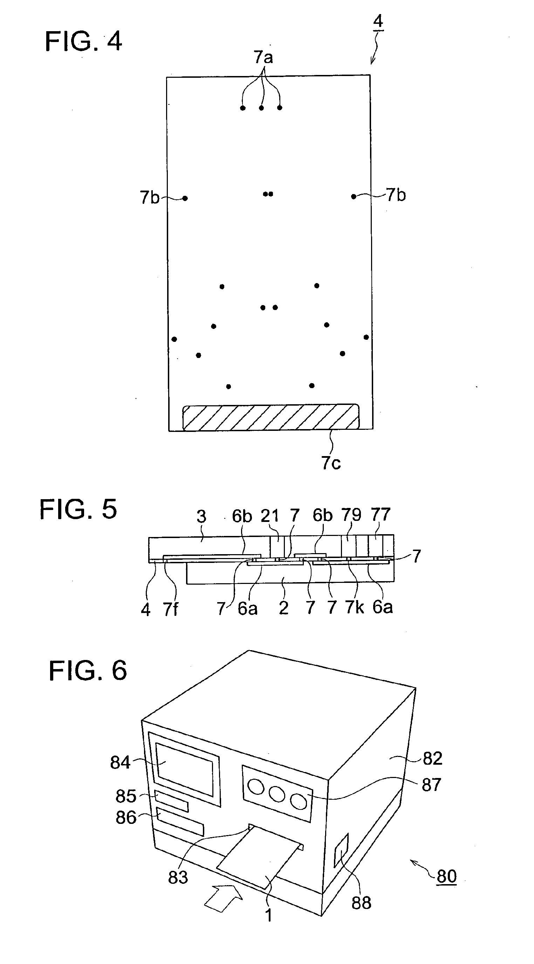

Fig. 4 is a view showing the communication holes provided on the communication hole substrate 4.

The microchip 1 of the present embodiment is used for gene amplification reaction. As Fig. 2 shows, on one side of a surface thereof, each of three reagent storing sections in a shape of a flow path stores two or three kids of the reagents.

At an upstream side of the reagent storing section 13 of the flow path substrate 2 shown by Fig. 2, a recessed section 11a is provided. The recessed section 11a communicates with the communication hole 7a provided on the communication hole substrate 4 shown by Fig. 4. The communication hole 7a communicates with a recessed section 11h provided on the flow path substrate 3 shown by Fig. 3 and is connected to the drive fluid injection port 78a via the coarse flow path 6b. When the microchip 1 is laminated and connected with a micro pump unit to be described, the drive fluid injection port 78 communicates with the micro pump via a packing 91a provided between a connection surface of the micro pump and the micro chip.

The reagent stored in the reagent storing section 13 of the flow path substrate 2 is pushed out from the reagent storing section 13 by other micro pump communicating to each recessed section 11a respectively and merged at a merging section 15, then a mixed reagent is stored in a mixed reagent storing section 16 at a downstream side thereof.

At the reagent storing section 13 and the mixed reagent storing section 16, a temperature adjusting unit 152 having, for example, a peltiert element not illustrated in Fig. 2 is urged on a surface at a side shown by Fig. 2 in a cooling area A, for a purpose of cooling so as to prevent the reagent form alteration.

The mixed reagent is merged with an analyte injected to an analyte receiving section 17 in a shape of the flow path. A recessed section 11b at an upstream side of the analyte receiving section 17 intercommunicates with the communication hole 7b provided on the communication hole substrate 4 shown in Fig. 4. The communication hole 7b intercommunicates with a recessed section 11i provided on the flow path substrate 3 shown in Fig. 3 and is connected with a drive fluid injection port 78c via the coarse flow path 6b. Meanwhile, the mixed reagent and the analyte are pushed by individual pumps communicating with each of the drive fluid ejection ports 78c respectively to a downstream side with the drive fluid so as to be mixed. Mixed fluid of the mixed reagent and the analyte is stored in a reaction section 18 and amplification reaction is started by heating.

The fluid after reaction is sent out to a detection section 19, and a target matter is detected by, for example, an optical detection method. In a periphery of the detection section 19, a processing fluid storing sections 20 to individually store various kinds of processing fluid necessary for detection operation, for example, fluid for necessary processing such as labeling for a subject substance for detection, and cleaning fluid. An upstream side of the processing fluid storing section 20 communicates with the coarse flow path 6b via a recessed section 11d, a communication hole 7 and a recessed section 11g of the flow path substrate 3. By supplying the drive fluid from a drive fluid injection port 78d provided at an upstream side thereof, the processing fluid stored in the processing fluid storing section 20 is pushed out to the detection section 19.

Also, at an upstream side of the regent storing section 13, an upstream side of the mixed reagent storing section and the analyte receiving section 17, and an upstream side of the processing fluid storing section 20, air bleeding flow paths 33 are provided. Air bubbles between the fluid of these storing sections and the drive fluid are purged outside from the air communicating hole 21 of the flow path substrate 3 via the communication hole 7b.

At a lowermost stream side of the flow path of Fig. 2, a recessed section 11c is provided so as to send out the waste fluid from a fluid path of upstream side to the waste fluid storing section 8 of the fluid substrate 3 via the communication hole 7C shown in Fig. 4.

On the flow path substrate 3, as Fig. 3 shows, a plurality of processing fluid storing sections 20 are provided. In these processing fluid storing sections 20, for example, fluid to stop reaction of the mixed reagent and the analyte and fluid necessary for operations for reaction or for detection of the reaction thereof, are stored respectively.

As a partial cross-sectional view of Fig. 1 shows, in the microchip 1 of the present embodiment, the flow path is formed by laminating the flow path substrates 2 and 3 where the flow path channel is formed and the communication hole substrate 4. On the flow path substrate 2, the micro flow path 6a to configure each functional section as described above is provided. On the other hand, on the flow path substrate 3, only the relatively wide coarse flow path 2b is provided. A width W1 of the micro flow path 6a and a width W2 of the coarse flow path 6b are within the aforesaid ranges.

Fig. 5 is a cross sectional view of the microchip 1 of the second embodiment of the present invention.

The microchip 1 of the first embodiment is an example, where the flow path substrate 2 is laminated on an upper side on page and the flow path substrate 3 is laminated on a lower side on page. Contrarily, in the present embodiment, the flow path substrate 3 is laminated at the upper side on page and the flow path substrate 2 is laminated at the lower side on page. Hereinafter, the same functional components as that of the first embodiment are denoted by the same numerals and descriptions thereof are omitted.

The microchip 1 of the present invention has a three layer structure composed of the flow path substrate 2, the flow path substrate 3 and the communication hole substrate 4, and a part of the microchip 1 has a two layer structure composed of the flow path substrate 3 and the communication hole substrate 4. At the part of the two layer structure of the communication hole substrate 4, a communication hole 7f is provided so that the drive fluid is injected form the communication hole 7f. The drive fluid injected from the communication hole 7f drives the reagent stored in the micro flow path 6a of the flow path substrate 2 through the coarse flow path 6b and the communication hole 7f. On the other hand, analyte injected form an analyte injection port 79 flows in the micro flow path 6a of the flow path substrate 2 from the communication hole 7k and reacts with the reagent injected form a reagent injection port 77. Waste fluid after reaction is stored in a waste fluid reservoir section 8. The air communication hole 21 is provided for purging air in the flow path 6 when fluid such as the drive fluid is injected. The reagent injection port 77 and the air communication port 21 are the through holes and formed by the same method as that of the first embodiment.

As above, the flow path substrate 3 can be laminated at then upper side on page and the flow path substrate 2 can be laminated at the lower side on page having the communication hole substrate 4 provided with the through hole in between.

Fig. 6 is an external view of a reaction detecting apparatus 80 using the microchip of the present invention.

The reaction detecting apparatus 80 is an apparatus to detect reaction of the analyte injected in to the microchip 1 in advance and the reagent automatically, and display a result on the display section 84.

An insert opening 83 is provided on the housing 83 of the reaction detecting apparatus 80. The microchip 1 is inserted into the insert opening 83 so as to be set inside the housing 82. Meanwhile, the insert opening 83 has a sufficient height for a thickness of the microchip 1 so that the microchip 1 does not contact with the insert opening 83 when the microchip is inserted. A numeral 85 is a memory card slot, a numeral 86 is a print output port, a numeral 87 is an operation panel and a numeral 88 is an input/output terminal.

An examiner inserts the microchip 1 in an arrow direction in Fig. 6 and operates the operation panel 87 to start examination. Inside the reaction detecting apparatus 80, examination of the reaction in the microchip 1 is conducted automatically, and after the examination is completed, a result is displayed on the display section 84 configured with a liquid crystal panel and so forth. The examination result can be outputted in a form of print from the print output port 86 or can be stored in the memory card inserted in the memory card slot 85 by operating the operation panel 87. Also, data can be stored, for example, in a personal computer through the output/input terminal 88 via, for example, via a LAN cable.

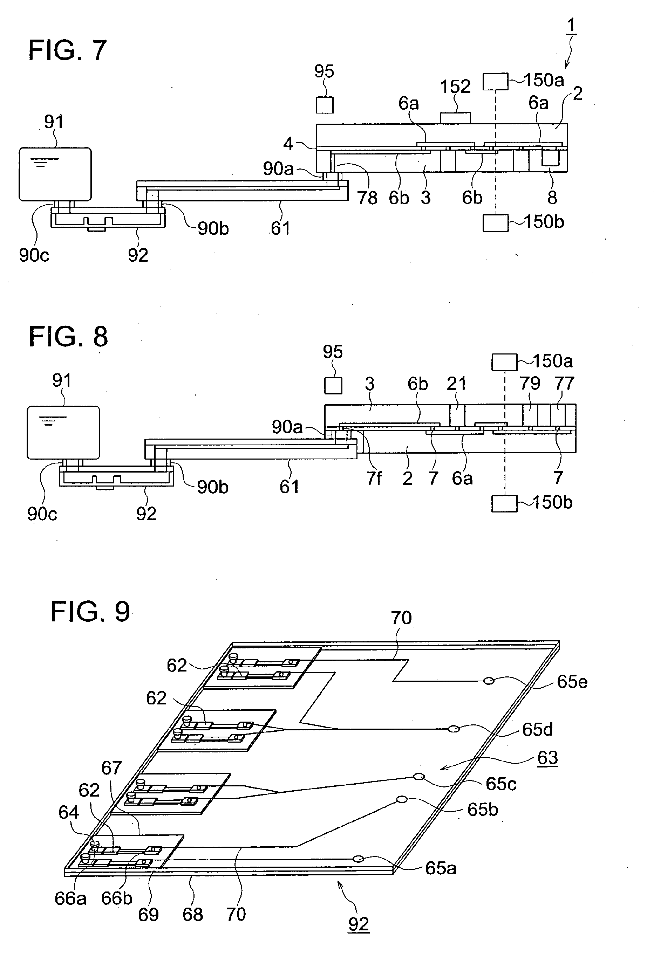

Fig. 7 is cross-sectional view showing an example of an internal structure of the reaction detecting apparatus 80 using the microchip 1 of the first embodiment, which is configured with a temperature adjusting unit 152, an optical detection section 150, a drive fluid pump 92, a packing 90 and a drive fluid tank 91 and so forth. The same components as that having been described in the foregoing are denoted by the same numerals and the descriptions are omitted.

Fig. 7 shows a state where an upper surface of the microchip 1 is in close contact with the temperature adjusting unit 152 and the lower surface thereof is in close contact with the packing 90a. The temperature adjusting unit 152 is movable in up and down direction on page by an unillustrated driving member.

In an initial state, the temperature adjusting unit 152 is ascended through the drive member from a state shown by Fig. 7 by more than the thickness of the microchip 1. Here, the microchip 1 can be inserted and pulled out in a left and right direction on page in Fig. 7 and the examiner inserts the microchip 1 until it comes to contact with an unillustrated regulation member from the insert port 83. When the microchip 1 is inserted to an predetermined position, a chip detection section 95 using a photo interrupter and so forth detects the microchip 1 and is turned on.

The temperature adjusting unit 152 having a peltier element, a power source device, and a temperature control device built-in, adjusts the temperature of the upper surface of the microchip within a predetermined temperature by generating heat or absorbing heat.

When an unillustrated control section receives a signal indicating that the detection section 95 is turned on, the temperature adjusting unit 152 is descended by the drive member so that the upper surface of the microchip 1 comes to contact with the temperature adjusting unit 152 and a lower surface thereof comes to contact with the packing 90.

In the detection section 19 of the microchip 1, the analyte and the reagent stored in the microchip 1 react and, for example, there is occurred color change, light emission, fluorescent and opacity. In the present embodiment, a reaction result of the reagent occurred in the detection section 19 is optically detected. The flow path substrate 2 forming the detection section 19 of the microchip 1 to optically measure the reaction result of the reagent, the flow path substrate 3 to cover the detection section 19 and the communication hole substrate 4 are formed with a light transmissive material. Therefore, the reaction result of the reagent and the analyte can be analyzed by conducting photometry or color measurement of the light transmitted through the detection section 19 of the microchip 1.

A light detection section 150 configured with a light emission section 150a and a light receiving section 150b is disposed so as to detect the light transmitted through the detection section 19 of the microchip 1.

At a suction side of the drive fluid pump 92, a drive fluid tank 91 is connected via the packing 90c so that the drive fluid charged in the drive fluid tank 91 is suctioned via the packing 90c. On the other hand, at a discharge side of the drive fluid pump 92, an intermediate flow path 61 is connected via a packing 90b so that the drive fluid sent out from the drive fluid pump 92 is injected to the coarse flow path 6b formed in the microchip 1, from the drive fluid injection section 78 of the microchip 1 via a packing 90a connected with a drive fluid outlet of the intermediate flow path 61. Meanwhile, the packing 90a is placed between the intermediate flow path 61 and the microchip 1, and the drive fluid outlet of the intermediate flow path 61, an opening section of the packing 90a and the drive fluid injection section 78 communicate each other. As above, the drive fluid is injected through the drive fluid injection section 78 via the communicating packing 90b, the intermediate flow path 61 and the packing 90a.

Fig. 8 is a cross-section view showing an exemplary internal structure of a reaction detecting apparatus 80 using the microchip 1 of the second embodiment.

The structure of the second embodiment is almost the same as that of the first embodiment. However, difference is that the packing 90a connected to the drive fluid outlet of the intermediate flow path 61 in the first embodiment is connected to the communication hole 7f of the micro chip in the second embodiment. The packing 90a is placed between the intermediate flow path 61 and the microchip 1 so that the drive fluid outlet of the intermediate flow path 61, an opening section of the packing 90 and the communication hole 7f communicate each other. As above, the drive fluid is injected through the communication hole 7f, from the drive fluid pump 92 via the communicating packing 90a, the drive fluid pump 92, the packing 90b, the intermediate flow path 61 and packing 90a.

Next, the drive fluid pump 92 will be described.

Fig. 9 is an explanatory diagram showing an example of a structure of the drive fluid pump 92 of the present embodiment.

The drive fluid pump 92 is configured with three substrates i.e. a substrate 67 made of silicon, a substrate 68 made of glass above the substrate 67 and substrate 69 made of glass above the substrate 68. The substrate 67 and substrate 68 are jointed by anodic bonding, and the substrate 68 and the substrate 69 are jointed by welding or adhesion.

A space between the substrate 67 made of silicon and the substrate 68 made of glass laminated on the substrate 67 thereof by anodic bonding forms the micro pump 62 (piezoelectric pump). A drive source of the micro pump 62 is, for example, an piezoelectric element which sends the fluid from left to right in Fig. 5 by changing a volume of a pressure camber inside.

An upstream side of the micro pump 62 communicates with an opening 64 provided on the substrate made of glass via a through hole 66a of the substrate 68 from a flow path provided on the substrate 67. The opening 64 is connected to the drive fluid tank 91 via the packing 90c so as to suction the drive fluid charged in the drive fluid tank 91.

On the substrate 69, a flow path 70 is pattered. For example, dimensions and a shape of the flow path 70 are such that 150 µm in a width, 300 µm in a depth and a rectangular. At a downstream side of the flow path 70, an opening 65 is provided to which fluid is sent from the micro pump 62 via the flow path 70. Also, the packing 90b is disposed by adjusting a position of the opening of the packing 90b so that the opening 65 and a flow path inlet port of the intermediate flow path 61 communicate each other. As above, the drive fluid can be injected from the drive fluid injection section 78 or the communication hole 7f via the packing 90b communicating with the opening 65, the intermediate flow path 61 and the packing 61.

As above, according to the present invention, the stacked type microchip which is easy to be manufactured, and the manufacturing method of the microchip thereof can be provided.

## Claims

1. A microchip, comprising:
two flow path substrates having flow paths in a shape of a groove formed on one side of each of the substrates; and
a communication hole substrate in which a communication hole is formed to communicate the flow paths of the two substrates each other; wherein
the two substrates are bonded in a way that the surfaces, on which the flow paths in the shape of the groove formed, face each other, having the communication hole substrate therebetween.

2. The microchip of claim 1, wherein one of the two substrates is provided with the flow path having a flow path width of not more than 200 µm, and an another substrate of the two substrates is not provided with the flow path having the flow path width of not more than 200 µm.

3. The microchip of claim 1 or 2, wherein one of the two substrates, not provided with the flow path having the flow path width of not more than 200 µm, is provide with a through hole penetrating the flow path substrate thereof.

4. The microchip of claim 3, wherein the though hole is a reagent injection port through which a reagent is injected.

5. The microchip of claim 3, wherein the though hole is an analyte injection port through which an analyte is injected.

6. The microchip of claim 3, wherein the though hole is an air communication hole which communicates with air in an atmosphere.

7. A manufacturing method of a microchip, comprising:
forming two flow path substrates having a flow path in a shape of a groove formed on one side of each of the substrates;
forming a communication hole substrate in which a communication hole is formed to communicate the flow paths of the two substrates each other; and
bonding the two substrates in a way that the surfaces, on which the flow paths in the shape of the groove formed, face each other having the communication hole substrate therebetween.

8. The manufacturing method of the microchip of claim 7, wherein one of the two substrates is formed by injection mold using a nickel electrocasting mold.
